Europäisches Patentamt

European Patent Office

Office européen des brevets

(19)

(11) Publication number: **0 297 060**
**A2**

(12) # EUROPEAN PATENT APPLICATION

(21) Application number: **88830266.8**

(22) Date of filing: **21.06.88**

(51) Int. Cl.⁴: **C 09 J 7/02**

(30) Priority: **24.06.87 IT 6754787**

(43) Date of publication of application:
**28.12.88 Bulletin 88/52**

(84) Designated Contracting States:
**AT BE CH DE ES FR GB GR IT LI LU NL SE**

(71) Applicant: **VIFAN S.p.A.**
**Zona Industriale**
**I-67010 Bazzano (L'Aquila) (IT)**

(72) Inventor: **del Lupo, Angelo**
**c/o VIFAN S.p.A Zona Industriale**
**I-67010 Bazzano (L'Aquila) (IT)**

**Lucciarini, Rolando**
**Via Lambruschini 3**
**I-05100 Terni (IT)**

(74) Representative: **Rambelli, Paolo et al**
**Jacobacci-Casetta & Perani S.p.A. Via Alfieri 17**
**I-10121 Torino (IT)**

(54) A quiet adhesive tape and a method for its production.

(57) A self-adhesive tape comprises a polyolefin-based film formed from a sheet comprising at least one polyolefin substrate layer (4) and at least one cellular polyolefin coating layer (5) co-extruded with the substrate layer; the sheet is stretched in two directions and has cell walls which have collapsed as a result of the biaxial stretching at least on the surface (7) of the coating layer (5) which faces away from the substrate layer (4), the collapsed cells forming a plurality of projections and/or depressions which reduce the force required and/or the noise produced during unrolling of the sticky tape.

FIG. 2

EP 0 297 060 A2

Bundesdruckerei Berlin

## Description

## A quiet adhesive tape and a method for its production

The present invention relates to an adhesive tape of the type comprising a polyolefin-based film with projections and/or depressions on its non-adhesive surface for reducing the force required and/or the noise produced during unrolling of the sticky tape.

A conventional technique used in the production of pressure-sensitive, self-adhesive tapes is the application of a composition or lacquer having non-stick properties, commonly known as a "release coating", to the back of the tape to reduce the force required to unroll the tape, which is wound in rolls and has an adhesive layer on its opposite surface. With the use of conventional release compositions, particularly when the substrate film is constituted by a polypropylene, during the rapid unrolling of the roll of sticky tape which is carried out during manufacture to produce smaller rolls of adhesive tape a deafening noise is produced which is extremely irritating to the personnel employed.

In order to overcome this problem, U.S. patent No. 4,397,905 describes an adhesive tape whose substrate does not have the conventional layer of release composition but has projections on its surface obtained by embossing of the substrate film. The presence of the projections limits the area of contact between adjacent turns of the tape which wound into rolls, limiting both the force required during unrolling and the noise. Adhesive tapes of this type have not, however, had commercial success, both because of the technical difficulties inherent in the embossing of the polypropylene, and because of the high cost of this operation.

The object of the present invention is to provide an adhesive tape of the type specified in the introduction to the present specification whose unrolling is less noisy and requires less force and whose production is advantageous from an economic point of view.

For this purpose, the subject of the present invention is an adhesive tape, characterised in that the polyolefin-based film is formed from a sheet comprising at least one polyolefin substrate layer and at least one cellular polyolefin coating layer, co-extruded with the substrate layer, the sheet being biaxially stretched and having cell walls which have collapsed as a result of the biaxial stretching to form the projections and/or depressions at least on the surface of the coating layer which faces away from the substrate layer.

A further subject of the present invention is a method for the production of the self-adhesive tape, characterised in that,

in order to produce the film, the method includes the steps of:

co-extruding at least one polyolefin flow with at least one flow of polyolefin including an expanding agent to produce a coextruded sheet comprising a substrate layer and a cellular coating layer, and

subjecting the coextruded sheet to biaxial stretching so as to cause the collapse of the cell walls at least on the surface of the coating layer so as to produce an outer surface with projections and/or depressions.

The adhesive tape and the method for its production will now be described with reference to the appended drawings, provided purely by way of non-limiting example, in which:

Figure 1 is a section of an unstretched co-extruded sheet, intended for the production of the film of adhesive tape,

Figure 2 is a section of a portion of adhesive tape according to the invention and

Figure 3 is a view of the film of Figure 2 from above.

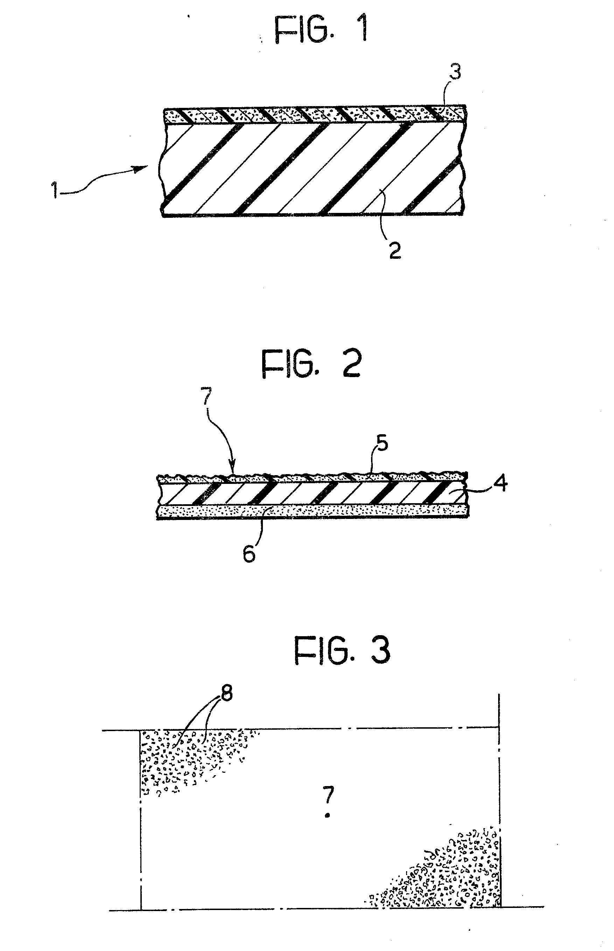

In Figure 1, a sheet of co-extruded plastics material is indicated 1 and comprises a substrate layer 2 of polyolefin plastics material and a coating layer 3 of cellular polyolefin material. The sheet 1 is produced by conventional co-extrusion techniques with the supply to an extrusion head of a first flow of polymeric material for forming the substrate layer 2 and a second polymeric flow including an expanding agent for forming the coating layer 3. The substrate layer 2 is preferably adapted to provide characteristics of mechanical strength and is constituted by polypropylene. The coating layer 3 may be constituted by a polymer selected from polyethylene and polypropylene, mixtures thereof, or ethylene-propylene copolymers.

The expanding agent incorporated in the polymeric mass which is intended to form the coating layer 3 is preferably a heat-decomposable expanding agent and is added to the polymeric mass at concentrations typically of the order of 0.5-4% by weight. By way of example, the expanding agents known as Hostatron P1940 and Novaspans Aelf 03, produced by Hoechst AG may be used. The latter is preferably used at concentrations of approximately 1% by weight.

Mineral fillers may also be included in the polymer composition, particularly silica, which confers anti-binding properties on the surface of the adhesive tape, or fillers constituted by calcium carbonate and talc which are useful since their presence further increases the roughness of the surface when the sheet has been stretched.

A silicone polymer and/or a paraffin wax may possibly be added to the polymeric mass of the coating composition to produce a further release action.

In the method for the production of the adhesive tape, the co-extruded sheet 1 emerging from the extrusion orifice is cooled and subsequently stretched in two directions in a continuous operation. The stretching ratio is typically between 7:1 and 10:1 for the transverse stretching and between 4:1 and 6:1 for the longitudinal stretching.

In Figure 2 a film is shown which is obtained by stretching the sheet 1 of Figure 1 and includes a coating layer 5, a substrate layer 4 and an adhesive layer 6 deposited on the substrate layer. As a result of the stretching, the walls of the cells of the expanded coating layer collapse, giving rise to a surface 7 which has a plurality of projections and/or depressions in the form of microcraters 8. The collapse of the cell walls may affect the whole thickness of the coating layer, or only its surface. The stretched film generally has an overall thickness of between 20 and 45 microns and the coating layer, which has the microcratered surface, generally has a thickness of between 1 and 5 microns.

In order to produce the adhesive tape, it is possible to apply a conventional release lacquer composition to the surface 7 of the coating layer, which further reduces the unrolling force. The use of a conventional release composition on a microcratered surface such as that obtained according to the invention does not cause an increase in the unrolling noise.

According to another embodiment, the substrate film of the self-adhesive tape may be obtained from a co-extruded sheet consisting of three layers, of which one is an intermediate substrate layer and two are cellular coating layers situated on opposite sides of the substrate layer. The biaxial stretching of this type of sheet leads to the production of a film having microcratered surfaces on both outer surfaces, one of which will receive the adhesive.

With the use of conventional solvent or Hot Melt adhesives the adhesive tape according to the invention enables adhesion values to be obtained of the order of 150Ag/cm on the back. The unrolling of the tape is uniform without tearing.

## Claims

1. An adhesive tape comprising a polyolefin-based film having, projections and/or depressions on its non-adhesive surface for reducing the force required and/or the noise produced during unrolling of the sticky tape, characterised in that the polyolefin-based film is formed from a sheet comprising at least one polyolefin substrate layer (2) and at least one cellular polyolefin coating layer (3) co-extruded with the substrate layer, the sheet being biaxially stretched and having, at least on the surface of the coating layer which faces away from the substrate layer, cell walls which have collapsed as a result of the biaxial stretching, forming the projections and/or depressions.

2. An adhesive tape according to Claim 1 or Claim 2, characterised in that the coating layer is constituted by polypropylene.

3. An adhesive tape according to Claim 1 or Claim 2, characterised in that the coating layer is constituted by a polymer selected from polyethylene, polypropylene, mixtures thereof, or an ethylene-propylene copolymer.

4. An adhesive tape according to any one of Claims 1 to 3, characterised in that the coating layer includes mineral fillers.

5. An adhesive tape according to Claim 4, characterised in that the mineral fillers are selected from the group consisting of calcium, talc and silica.

6. An adhesive tape according to any one of Claims 1 to 5, characterised in that it includes a layer of polymeric release lacquer deposited on the coating layer.

7. An adhesive tape according to any one of Claims 1 to 6, characterised in that the polymeric composition forming the coating layer includes a silicone polymer and/or a paraffin wax.

8. An adhesive tape according to any one of Claims 1 to 7, characterised in that it includes a second coating layer with collapsed cell walls on the opposite side from the first coating layer.

9. A method for the production of an adhesive tape comprising a polyolefin-based film having projections and/or depressions on its non-adhesive surface for reducing the force required and/or the noise produced during unrolling of the sticky tape, characterised in that in order to produce the film, the method includes the steps of:

co-extruding at least one polyolefin flow with at least one flow of polyolefin including an expanding agent to produce a coextruded sheet comprising a substrate layer and a cellular coating layer, and

subjecting the coextruded sheet to biaxial stretching so as to cause the collapse of cell walls at least on the surface of the coating layer so as to produce an outer surface with projections and/or depressions.

10. A method according to Claim 9, characterised in that an agent which is decomposable by heat is used as the expanding agent, at a concentration of between 0.5 and 4% by weight.

11. A method according to Claim 9 or Claim 10, characterised in that the coextruded sheet is subjected to biaxial stretching with a ratio of between 7:1 and 10:1 for the transverse stretching and of between 4:1 and 6:1 for the longitudinal stretching.

12. An adhesive method according to any one of Claims 9 to 11, characterised in that the polymeric material forming the substrate layer is constituted by polypropylene.

13. A method according to any one of Claims 9 to 12, characterised in that the polyolefin including the expanding agent and forming the coating layer is selected from the group consisting of polyethylene and polypropylene, mixtures thereof, and ethylene-propylene copolymers.

14. A method according to any one of Claims 9 to 13, characterised in that the polyolefin forming the coating layer includes mineral fillers selected from the group consisting of silica, calcium carbonate and talc.

15. A method according to any one of Claims 9 to 14, characterised in that the polyolefin forming the coating layer also includes a silicone resin and/or a paraffin wax.

16. A method according to any one of Claims 9 to 15, characterised in that it also includes the application of a release composition to the coating layer.

17. An adhesive tape made by a method according to any one of Claims 9 to 16.

18. A method for the production of a film of plastics material with a rough surface, characterised in that it includes the steps of:

co-extruding at least one flow of polymer with a flow of polymer including an expanding agent to produce a coextruded sheet including a substrate layer and a cellular coating layer, and

subjecting the co-extruded sheet to biaxial stretching so as to cause the collapse of cell walls at least on the surface of the coating layer to produce a film with a roughened outer surface.

19. A film of plastics material, characterised in that it is formed from a sheet comprising at least one polymeric substrate layer (2) and at least one cellular polymeric coating layer (3) co-extruded with the substrate layer, the sheet being biaxially stretched and having, at least on the opposite surface of the coating layer from the substrate layer, cell walls which have collapsed as a result of the biaxial stretching so making this surface rough.

## FIG. 1

## FIG. 2

## FIG. 3